(19) Europäisches Patentamt
European Patent Office
Office européen des brevets

(11) EP 0 648 166 B1

(12) EUROPÄISCHE PATENTSCHRIFT

(45) Veröffentlichungstag und Bekanntmachung des Hinweises auf die Patenterteilung:
11.03.1998 Patentblatt 1998/11

(21) Anmeldenummer: 93915822.6

(22) Anmeldetag: 07.07.1993

(51) Int. Cl.⁶: $B60R\ 16/02$, $H04B\ 1/20$

(86) Internationale Anmeldenummer:
PCT/EP93/01757

(87) Internationale Veröffentlichungsnummer:
WO 94/01304 (20.01.1994 Gazette 1994/03)

(54) **VERFAHREN UND SCHALTUNGSANORDNUNG ZUM VERSORGEN VON LAUTSPRECHERN UND ANDEREN ELEKTRISCHEN VERBRAUCHERN IN FAHRZEUGTÜREN MIT SIGNALEN**

PROCESS AND CIRCUITRY FOR SUPPLYING SIGNALS TO LOUDSPEAKERS AND OTHER ELECTRIC CONSUMERS ARRANGED IN VEHICLE DOORS

PROCEDE ET CIRCUITS D'ALIMENTATION EN SIGNAUX DE HAUT-PARLEURS ET D'AUTRES CONSOMMATEURS ELECTRIQUES SITUES DANS DES PORTES DE VEHICULES

(84) Benannte Vertragsstaaten:
DE ES FR GB IT NL SE

(30) Priorität: 08.07.1992 DE 4222321

(43) Veröffentlichungstag der Anmeldung:
19.04.1995 Patentblatt 1995/16

(73) Patentinhaber:
DODUCO GMBH + Co
Dr. Eugen Dürrwächter i.K.
75181 Pforzheim (DE)

(72) Erfinder:
• NEY, Joachim
D-75223 Niefern (DE)
• NORMANN, Norbert
D-75223 Niefern-Öschelbronn (DE)

• SCHULZE, Gunter, Lothar
D-75228 Ispringen (DE)
• UHL, Günter
D-74921 Helmstadt-Bargen (DE)

(74) Vertreter:
Twelmeier, Ulrich, Dipl. Phys. et al
porta patentanwälte
Dipl.-Phys. U. Twelmeier
Dr. techn. W. Leitner
Westliche Karl-Friedrich-Str. 29-31
75172 Pforzheim (DE)

(56) Entgegenhaltungen:
EP-A- 0 277 014          EP-A- 0 393 233
EP-A- 0 457 673          EP-A- 0 519 111
DE-A- 3 303 011          US-A- 4 176 250

**Beschreibung**

Die Erfindung betrifft ein Verfahren und eine Schaltungsanordnung zum Versorgen von Lautsprechern in Fahrzeugtüren mit elektrischen NF-Audiosignalen und weiteren elektrischen Verbrauchern in den Fahrzeugtüren mit Steuersignalen und mit Laststrom. In Türen von Automobilen sind heutzutage eine ganze Anzahl von elektrischen Verbrauchern untergebracht, die mit Strom und elektrischen Steuersignalen versorgt werden müssen, beispielsweise Fensterheber, verstellbare Aussenspiegel, Aussenspiegelheizung, Warnlicht, Türschließkontakte, Kontakte für Innenraumbeleuchtung, Lautsprecher, Zentralverriegelung, evtl. auch eine Bedieneinheit für ein elektrisches Schiebedach. In herkömmlicher Schaltungstechnik benötigt man dafür bis zu 40 Leitungen. Das stellt jedoch ein erhebliches Problem für die Montage der Türen dar und erschwert Reparaturen an der Tür, da die Leitungen nicht nur teils in der Tür und teils in der übrigen Karosserie verlegt, sondern auch vom Fahrzeugrahmen mittels eines flexiblen Kabelbaumes in die jeweilige Tür hineingeführt werden müssen. Hinzu kommt, dass die meisten Leitungen einen Laststrom führen und demgemäss einen hinreichend großen Leitungsquerschnitt haben müssen. In Anbetracht der Tatsache, dass die Zahl der elektrischen Leitungen in Kraftfahrzeugen in den letzten Jahren sehr stark angestiegen ist (ein moderner Mittelklassewagen enthält größenordnungsmässig 1000 m Kabel), haben die Automobilbauer inzwischen ernste Probleme, die umfangreichen Kabelbäume im Fahrzeug unterzubringen.

Aus der EP 0 277 014 A2 ist es bekannt, die Sitzplätze in einem Flugzeug, in der Eisenbahn oder in einem Reisebus im Multiplexverfahren mit Video-, Audio-, Steuer- und Zustandsabfragesignalen zu versorgen, doch werden über dieselben Leitungen nicht gleichzeitig Lastströme an elektrische Verbraucher in den Sitzen übertragen und Schwierigkeiten, wie sie beim Verkabeln von Fahrzeugtüren auftreten, sind hier nicht angesprochen. Ähnlich verhält es sich mit der US-A-4,176,250, aus welcher es bekannt ist, lediglich Steuersignale im Zeitmultiplexverfahren in Fahrzeugtüren hinein bzw. aus ihnen heraus zu übertragen.

Aus der EP-0 393 233 A2 ist es bekannt, in Fahrzeugen von Sensoren wie dem Füllstandsgeber im Kraftstofftank, dem Öldruckmesser im Motorgehäuse, Temperaturfühlern und Lichtfühlern zur Scheinwerferkontrolle und ihren zugehörigen Anzeigeelementen, einer Klimaanlage Kontrolleuchten und dergleichen gelieferte Signale mittels eines Senders zusammen mit der Versorgungsspannung für den Sender über eine gemeinsame Leitung zu übertragen, indem die Versorgungsspannung mit den Meßsignalen moduliert wird. Lastströme für elektromotorisch betätigte Verbraucher oder für Heizungen werden dabei ebensowenig mitübertragen wie Audiosignale.

Aus der früher angemeldeten, aber nicht vorveröffentlichten EP 0 519 111 A1 ist es bekannt, in Kraftfahrzeugen digitale Audio- und Steuerdaten auf einer gemeinsamen Busleitung, die aus Lichtwellenleitern gebildet ist, in einem System von mehreren Teilnehmern zu übertragen (Stand der Technik nach Art. 54(3) und (4) EPÜ für die benannten Vertragsstaaten DE, FR, GB).

Der vorliegenden Erfindung liegt die Aufgabe zugrunde, den für Fahrzeugtüren anfallenden Verkabelungsaufwand zu reduzieren.

Diese Aufgabe wird gelöst durch ein Verfahren mit den im Anspruch 1 angegebenen Merkmalen und durch eine Schaltungsanordnung mit den im Anspruch 10 angegebenen Merkmalen. Vorteilhafte Weiterbildungen der Erfindung sind Gegenstand der abhängigen Ansprüche.

Erfindungsgemäss werden die in eine Tür zu übertragenden Steuersignale und NF-Audiosignale ausserhalb der Tür auf ein gemeinsames Trägersignal aufmoduliert und auf diesem Träger über eine Datenleitung in die Tür übertragen, dort frequenzmässig nach Audio- und Steuersignalen getrennt und an ihre vorbestimmten Verbraucher weitergeleitet. Außerdem wird das Trägersignal in der Tür gleichgerichtet und zur Stromversorgung der in der Tür vorgesehenen Verbraucher verwendet. Dabei erfolgt die Übertragung der Steuersignale zweckmässigerweise in Form eines seriellen Daten-Bus.

Steuersignale in Form eines seriellen Daten-Bus zu übertragen ist in der Automobiltechnik an sich bereits bekannt, z.B. bei der elektronischen Motorsteuerung, jedoch noch nicht zur Übertragung von Steuersignalen in eine Tür. Erfindungsgemäss werden jedoch nicht nur Steuersignale als serieller Daten-Bus übertragen, sondern deren Übertragung kombiniert mit der Übertragung von NF-Audiosignalen, welche zu diesem Zweck gemeinsam mit den Steuersignalen auf einen gemeinsamen Träger aufmoduliert werden. Dafür benutzt man im Fahrzeug ausserhalb der Tür ein Bus-Steuergerät, welches das modulierte Trägersignal erzeugt und überträgt, und in der Tür benutzt man für den Empfang dieses Signales eine Schaltungsanordnung, nachfolgend als Türmodul bezeichnet, in welcher das modulierte Signal demoduliert und in die Steuersignale und NF-Audiosignale getrennt wird. Vom Türmodul aus werden die in der Tür vorhandenen Verbraucher versorgt. Auf diese Weise müssen in die Tür nicht mehr als zwei Leitungen hineinführen, nämlich eine Datenleitung vom Bus-Steuergerät zum Türmodul sowie gegebenenfalls eine Masseleitung. Dadurch ist die Verkabelung der Türen ausserordentlich vereinfacht, weil in die Tür allenfalls noch ein zweiadriges flexibles Verbindungskabel hineinführen muss, welches durch einen entsprechenden zweiadrigen Steckverbinder trennbar ist.

Es kommt auch vor, dass in einer Tür Schalter oder andere Bedienelemente sind, mit denen Verbraucher betätigt werden, die nicht in derselben Tür, sondern ausserhalb der Tür oder in einer anderen Tür liegen. So kann vor der Fahrertür aus der Rückspiegel an der Beifahrertür verstellt und/oder die Zentralverriegelung betätigt werden. In vorteilhafter Weiterbildung der Erfindung ist deshalb vorgesehen, dass auch in einer Tür erzeugte, für elektrische Verbraucher ausserhalb der Tür bestimmte Steuersignale ebenfalls dem Trägersignal aufmoduliert und dann aus der Tür heraus übertragen werden zu einem anderen Türmodul, vorzugsweise über ein Bus-Steuergerät, an welches alle Türmodule angeschlossen sind. Auf diese Weise ist ein bidirektionaler Datenverkehr zwischen den Türmodulen und dem zentralen Bus-Steuergerät möglich, bidirektional natürlich nur für die Steuersignale, nicht aber für die Audiosignale für die das nicht benötigt wird.

Für die Auswahl des Trägersignals und des Modulationsverfahrens gibt es verschiedene Möglichkeiten. So kann man als Trägersignal ein z.B. sinusförmiges oder sinusähnliches Wechselspannungssignal verwenden, vorzugsweise mit einer Frequenz zwischen 80 kHz und 120 kHz, welchem die NF-Audiosigsignale (Frequenzbereich ca. 30 Hz bis 18 kHz) durch Frequenzmodulation aufmoduliert werden. Für die Übertragung der digitalen Steuersignale bedient man sich in diesem Fall vorzugsweise auch der Frequenzmodulation und moduliert dem Trägersignal zweckmässigerweise oberhalb des für die Audio-Übertragung verwendeten Frequenzbandes zwei diskrete Frequenzen für die Symbole "0" und "1" auf.

Eine andere vorteilhafte Möglichkeit besteht darin, ein rechteckförmiges Trägersignal zu verwenden. Wird das rechteckförmige Trägersignal in der Tür gleichgerichtet, erhält man im Idealfall eine lückenfreie Gleichspannung, die ohne großen Aufwand zur Stromversorgung der Verbraucher in der Tür herangezogen werden kann. Hierbei erfüllt das Trägersignal eine doppelte Funktion: Zum einen dient es als Informationsträger, zum anderen überträgt es die Energie, welche die Verbraucher in der Tür benötigen, um zu arbeiten. Eine gesonderte Leitung zur Energieübertragung kann deshalb entfallen. Das rechteckförmige Trägersignal kann frequenzmoduliert oder auch amplitudenmoduliert werden, vorzugsweise wird es pulsbreitenmoduliert, um die NF-Audiosignale zu übertragen. Der dafür erforderliche maximale Modulationshub kann beispielsweise durch Änderung des Tastverhältnisses von 0,7 bis 1,3 verwirklicht werden. Auch bei Verwendung eines rechteckförmigen Trägersignals wird eine Frequenz von ungefähr 80 kHz bis 120 kHz für das Trägersignal bevorzugt. Damit ist die Samplefrequenz rund 10 mal so hoch wie die NF-Audiofrequenz, was für eine einwandfreie NF-Übertragung mehr als ausreichend ist. Die hohe Samplefrequenz ermöglicht eine besonders einfache Modulation und Demodulation.

Im Falle eines rechteckförmigen Trägersignals werden die binär kodierten Steuersignale dem Trägersignal vorzugsweise durch Amplitudenmodulation aufgeprägt. Dazu wird der rechteckige Spannungsverlauf des Trägersignals während einer Periode vorzugsweise als "Leer-Rahmen" für ein zu übertragendes Bit einer Serie von Bits benutzt. Damit ist, wie weiter hinten noch beschrieben wird, leicht eine Codierung von vier verschiedenen Zuständen in jeder Übertragungsperiode möglich.

Eine neuartige, vorteilhafte Art und Weise der drahtlosen Signalübertragung zwischen dem Bus-Steuergerät und dem Türmodul ist Gegenstand der am selben Tage eingereichten Patentanmeldung mit dem Titel "Verfahren und Schaltungsanordnung zum Versorgen von elektrischen Verbrauchern auf schwenkbaren Trägern mit elektrischem Strom und/oder anderen elektrischen Signalen", auf welche hiermit bezuggenommen wird.

Ein Ausführungsbeispiel der Erfindung ist in den beigefügten schematischen Zeichnungen dargestellt.

Figur 1      ist ein Blockschaltbild einer Schaltungsanordnung zum Versorgen von Lautsprechern und anderen elektrischen Verbrauchern in Fahrzeugtüren,

Figur 2      zeigt als Detail zu dem Blockschaltbild aus Figur 1 eine Schaltungsanordnung zur Energieübertragung mittels des Trägersignals,

Figur 3      zeigt dazu den Verlauf der Spannung eines rechteckförmigen Trägersignals,

Figur 4      zeigt die durch Gleichrichtung des Trägersignals aus Figur 3 gewonnene Gleichspannung zur Versorgung der Verbraucher in der Tür,

Figur 5      zeigt als Detail zum Blockschaltbild gemäss Figur 1 eine Schaltungsanordnung in Blockdarstellung zur Übertragung eines NF-Audiosignals,

Figur 6      zeigt den zeitlichen. Verlauf eines NF-Audiosignals,

Figur 7      zeigt eine Sägezahnspannung, mit welcher das NF-Audiosignal gemäss Figur 6 gesampled wird,

Figur 8      zeigt das als Ergebnis des Abtastens des NF-Audiosignals gewonnene pulsbreitenmodulierte Rechtecksignal,

Figur 9      zeigt als Detail eine Schaltung zum Empfang und zur Verarbeitung des pulsbreitenmodulierten Signals aus Figur 8,

Figur 10      zeigt eine Folge von Gleichspannungsimpulsen die durch die Schaltungsanordnung in Figur 9 gewonnen werden und deren Amplitude das Tastverhältnis des Rechtecksignals aus Figur 8 wiederspiegelt,

Figur 11 zeigt den Verlauf eines NF-Audiosignals, welches durch Tiefpassfilterung aus dem Signal gemäss Figur 10 zurückgewonnen wurde, und

Figur 12 zeigt ein zur Übertragung von binär codierten Steuersignalen moduliertes Trägersignal.

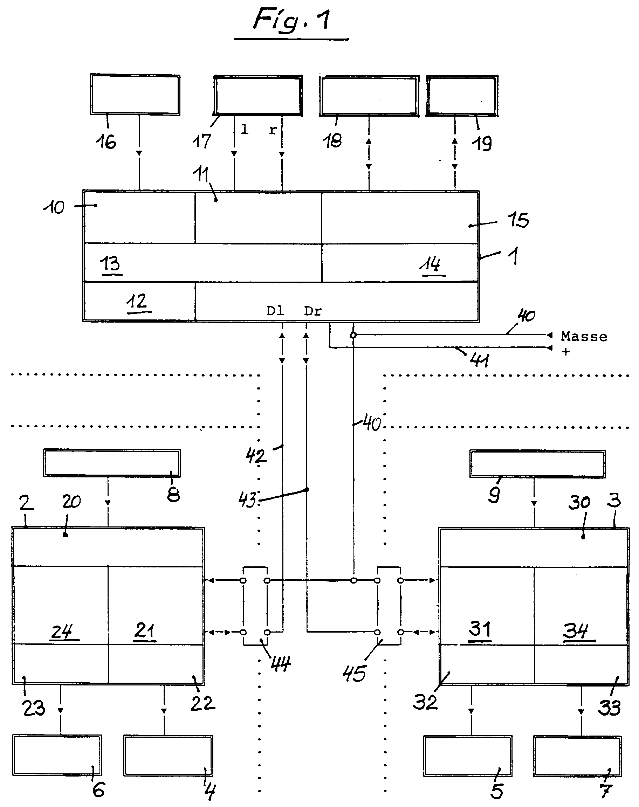

Die Schaltungsanordnung in Fig. 1 enthält ein Bus-Steuergerät 1, welches im Fahrzeug an einer Stelle ausserhalb der Türen, z.B. hinter dem Armaturenbrett, angeordnet ist, sowie einen Türmodul 2 in einer linken Tür und einen Türmodul 3 in einer rechten Tür. Beide Türen enthalten einen Lautsprecher 4 bzw. 5 und Stellelemente 6 bzw. 7 für unterschiedliche Verbraucher, insbesondere für die Verstellung der Aussenspiegel, für Fensterheber und für eine Zentralverriegelung. Ausserdem sind an jeder Tür diverse Bedienelemente 8 bzw. 9 angebracht.

Das Bus-Steuergerät 1 enthält eine Abfrageeinheit 10 zum Abfragen der Stellung von Schaltern und anderen ausserhalb der Türen angeordneten Bedienelementen 16, eine mit einem Autoradio 17 verbundene Schaltung 11 zum Einspeisen der auf zwei Kanälen (rechter und linker Stereokanal) vom Autoradio 17 gelieferten NF-Audiosignale, einen Frequenzgenerator 12 zum Erzeugen eines Wechselspannungs-Trägersignals mit einer Frequenz von ca. 100 kHz, einen Modulator/Demodulator 13 (Modem), einen die Abläufe im Bus-Steuergerät steuernden Mikroprozessor 14 und eine Schaltung 15 für den Austausch von Informationen zwischen dem Bus-Steuergerät 1 und einer Zentralverriegelungsanlage 18 und einer Alarmanlage 19.

Die Türmodule enthalten ebenfalls eine Abfrageeinheit 20 bzw. 30 zum Abfragen der Stellung von Schaltern und anderen Bedienelementen in der jeweiligen Tür, einen Modulator/Demodulator 21 bzw. 31 (Modem), einen NF-Verstärker 22 bzw. 32, Schaltstufen 23 bzw. 33 zum Umsetzen der demodulierten Steuersignale in Stellsignale für in der betreffenden Tür vorgesehene Stellelemente 6 bzw. 7 von elektrischen Verbrauchern, sowie schließlich einen Mikro-Controller 24 bzw. 34, welcher die Abläufe im Türmodul 20 bzw. 30 steuert.

Sowohl das Bus-Steuergerät 1 als auch die Türmodule 2 und 3 sind über eine Masseleitung 40 und das Bussteuergerät 1 zusätzlich über eine demgegenüber Spannung führende Leitung 41 an eine Stromquelle (Fahrzeugbatterie) angeschlossen. Darüberhinaus führt von einem Datenausgang Dl des Bus-Steuergerätes 1 eine Datenleitung 42 in die linke Tür und von einem Datenausgang Dr eine Datenleitung 43 in die rechte Tür. Die Leitung 40 für die Stromversorgung und die Datenleitungen 42 und 43 sind über ein Koppelelement 44 bzw. 45 in die Tür hineingeführt. Bei den Koppelelementen 44 und 45 kann es sich um zweiadrige Steckverbinder mit den zugehörigen zweiadrigen flexiblen Anschlußkabeln handeln.

Die Schaltungsanordnung arbeitet wie folgt:

Durch die Abfrageeinheit 10 des Bus-Steuergerätes 1 werden die diesem zugeordneten Bedienelemente 16 zyklisch abgefragt; binär codierte Steuersignale, die den durch die Abfrage ermittelten Schaltstellungen entsprechen, werden durch das Modem 13 auf das vom Frequenzgenerator 12 gelieferte Trägersignal aufmoduliert und je nach der codierten Bestimmung in die rechte Tür oder in die linke Tür oder in beide Türen übertragen. Ist das Autoradio 17 eingeschaltet, werden die vom Autoradio stammenden und für die Türlautsprecher 4 und 5 bestimmten NF-Signale in das Bus-Steuergerät 1 eingespeist und ebenfalls durch das Modem 13 auf das Trägersignal aufmoduliert, wobei im Falle von Stereosignalen der linke Kanal über die Datenleitung 42 zum Türmodul 2, der rechte Kanal über die Datenleitung 43 zum Türmodul 3 übertragen wird. Bei Mono-NF-Signalen werden von den Datenleitungen 42 und 43 übereinstimmende NF-Signale übertragen.

Die in den Türmodulen ankommenden Signale werden empfangen, im Modem 21 bzw. 31 demoduliert und frequenzmässig getrennt. Die NF-Signale werden durch einen NF-Verstärker 22 bzw. 32 verstärkt und an den Türlautsprecher 4 bzw. 5 übermittelt. Die demodulierten Steuersignale werden vom Mikro-Controller 24 bzw. 34 ausgewertet und steuern über Schaltstufen 23 und 33 die verschiedenen Stellelemente 6 bzw. 7.

Die Abfrageeinheiten 20 und 30 in den beiden Türmodulen 2 bzw. 3 fragen ihrerseits zyklisch die Stellung der in derselben Tür vorgesehenen Bedienelemente 8 und 9 ab und liefern binär codierte Steuersignale, die die abgefragten Stellungen wiedergeben. Der Mikro-Controller 24 bzw. 34 prüft, ob das abgefragte Bedienelement zu einem Stellelement in derselben Tür oder zu einem Stellelemente ausserhalb derselben Tür gehört; gehört es zu einem Stellelement in derselben Tür, wird das Stellelement durch das zugehörige Steuersignal ohne Umweg über das Bus-Steuergerät 1 über die Schaltstufe 23 bzw. 33 angesteuert. Gehört z.B. das abgefragte Bedienelement 8 der linken Tür zu einem Stellelement 7 in der rechten Tür, dann wird das von der Abfrageeinheit 20 gelieferte binär codierte Steuersignal im Modem 21 auf das Trägersignal aufmoduliert, in das Bus-Steuergerät 1 übertragen, dort demoduliert, bewertet, erneut auf das Trägersignal moduliert und in die rechte Tür übertragen, dort im Modem 31 demoduliert und steuert über die Schaltstufe 33 das Stellelement 7.

Das Bus-Steuergerät 1 kann ferner z.B. vom Kofferraumschloss, welches Bestandteil der Zentralverriegelung 18 ist, Signale empfangen und an die beiden Türmodulen 2 und 3 weiterleiten. Ausserdem können von den Türmodulen über das Bus-Steuergerät 1 Signale an eine Alarmanlage 19 und umgekehrt von der Alarmanlage an die Türmodulen 3 und 4 übermittelt werden.

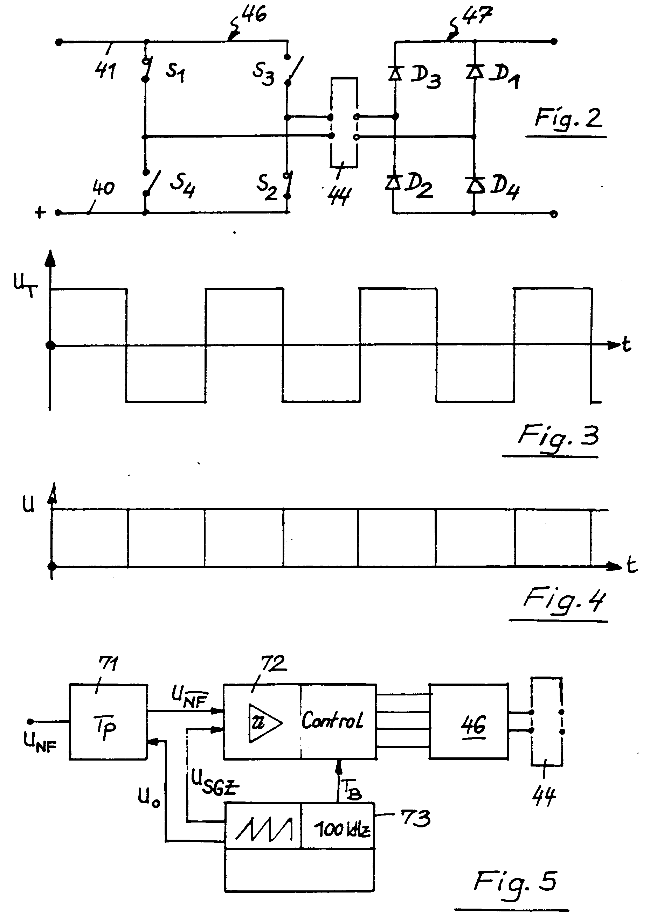

Als Trägersignal wird vorzugsweise ein hochfrequentes, rechteckförmiges Wechselspannungssignal verwendet, wie es in Figur 3 dargestellt ist. Ein solches Trägersignal kann aus der im Fahrzeug vorhandenen Batteriespannung gemäß Fig. 2 leicht durch eine Brückenschaltung 46 erzeugt werden: Vier schnelle elektronische Schalter S1, S2, S3 und S4 sind zu einer Brücke 46 zusammengeschaltet, welche über die Leitungen 40 und 41 aus der Fahrzeugbatterie gespeist wird. Entweder sind die Schalter S1 und S2, oder die Schalter S3 und S4 geschlossen, und das im Wechsel, so dass an den Eingangsklemmen des Koppelementes 44 (oder 45) die in Figur 3 dargestellte Rechteckspannung erscheint, welche im Türmodul 2 (oder 3) durch eine Gleichrichterbrücke 47, bestehend aus den Dioden D1 bis D4 gleichgerichtet wird und die in Figur 4 dargestellte Gleichspannung ergibt, welche im Idealfall lückenfrei ist. Der Glättungsaufwand für diese Gleichspannung beschränkt sich auf die Überbrückung der durch die endliche Schaltflankensteilheit entstehenden nadelförmigen Spannungseinbrüche. Die Gleichrichterbrücke 47 dient als Stromquelle für die Versorgung der Verbraucher in der Tür.

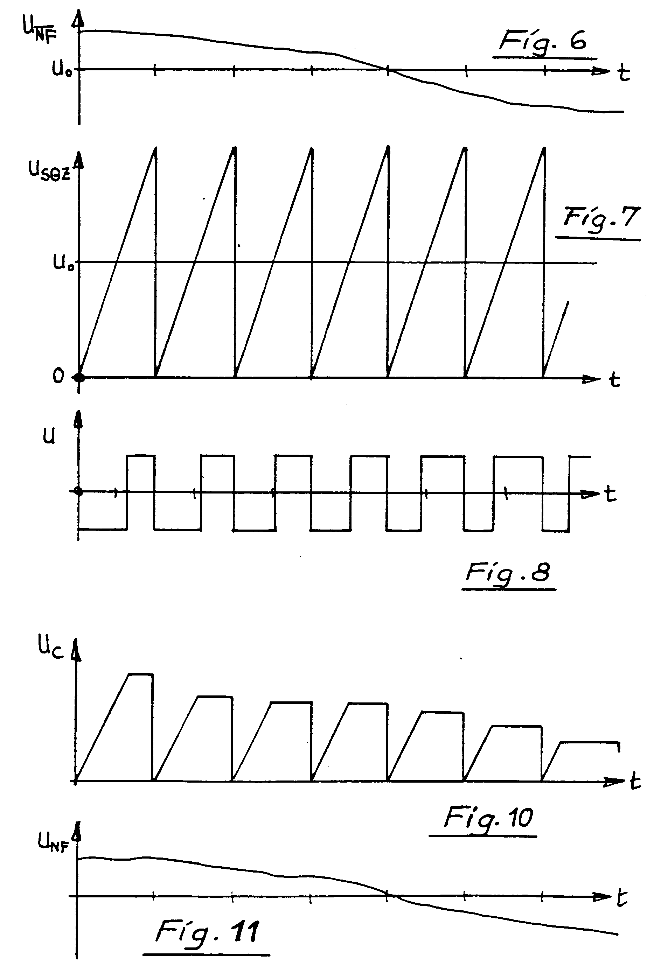

Die Übertragung eines NF-Audiosignals kann durch Modulation des Tastverhältnisses des in Figur 3 dargestellten rechteckförmigen Trägersignals erfolgen, welches zu diesem Zweck vorzugsweise eine Frequenz von größenordnungsmässig 100 kHz hat. Dem dient die in Figur 5 dargestellte Schaltung: Das NF-Audiosignal wird einem Tiefpaßfilter 71 zugeführt, dadurch in seiner Bandbreite und Amplitude begrenzt und zur Einstellung eines passenden Arbeitspunktes zu einer konstanten Gleichspannung $U_0$ addiert. Das auf diese Weise entstehende niederfrequente Gleichspannungssignal $U_{\overline{NF}}$ ist in Figur 6 dargestellt. Zwischen dem Tiefpaßfilter 71 und der Brückenschaltung 46 (siehe Figur 2) befindet sich eine Steuerschaltung 72 für die Brückenschaltung 46, welche bestimmt, wann die Schalter S1 und S2 bzw. S3 und S4 umschalten. Dazu ist weiterhin ein Taktgenerator 73 vorgesehen, welcher ein 100 kHz-Taktsignal an die Steuerschaltung 72 liefert. In diesem 100 kHz-Takt werden beispielsweise die Schalter S1 und S2 geschlossen und gleichzeitig die Schalter S3 und S4 geöffnet. Wann innerhalb der Periode des Taktgenerators 73 die Schalter S1 und S2 geöffnet und stattdessen die Schalter S3 und S4 geschlossen werden, wird durch Abtasten des Signals gemäss Figur 6 durch die in Figur 7 dargestellte Sägezahnspannung $U_{SGZ}$ bestimmt, welche die unipolare Amplitude $2U_0$ sowie die Frequenz 100 kHz hat und ebenfalls vom Taktgenerator 73 erzeugt wird. Die Sägezahnspannung $U_{SGZ}$ wird in der Steuerschaltung 72 mit der niederfrequenten Spannung $U_{\overline{NF}}$ verglichen. Der Vergleichwird mit Beginn jeder Periode des Taktgenerators 73 gestartet; sobald die Sägezahnspannung den aktuellen Spannungswert $U_{\overline{NF}}$

erreicht hat, wird die Brückenschaltung 46 umgepolt; mit Beginn der nächsten Periode des Taktgenerators wird die Brücke 46 erneut umgepolt. Damit ist der Amplitudenwert $U_{\overline{NF}}$ in das Tastverhältnis codiert, das auf diese Weise in seiner Pulsbreite modulierte Trägersignal ist in Figur 8 dargestellt.

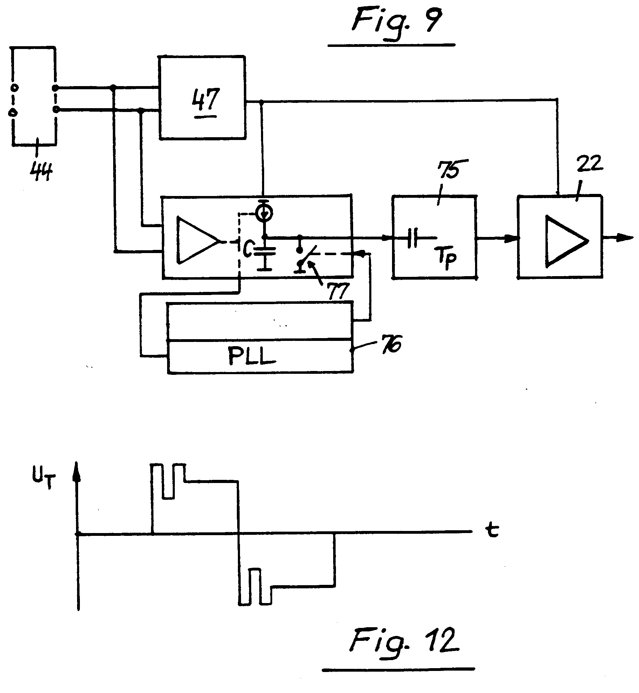

Das pulsbreitenmodulierte Signal wird über das Koppelelement 44 in die Fahrzeugtür übertragen, in welcher der Türmodul 2 die in Figur 9 dargestellte Schaltung enthält: Die Brückenschaltung 47 (siehe Figur 2), eine Schaltung 74 zur Umsetzung des Tastverhältnisses, ein Tiefpaßfilter 75, einen NF-Verstärker 22 und eine phasenstarre Steuerschaltung 76. Der Tastverhältnis-Umsetzer 74 ermittelt das Vorzeichen der ihm zugeführten pulsbreitenmodulierten Rechteckspannung und schaltet bei negativer Spannung eine von der Brückenschaltung 47 gespeiste Stromquelle im Tastverhältnis-Umsetzer 74 auf einen Kondensator C, welcher aufgeladen wird, solange die negative Halbwelle der Rechteckspannung (Figur 8) andauert; bis zu diesem Zeitpunkt steigt die Spannung am Kondensator C linear an (Figur 1) und bleibt dann konstant, bis der Kondensator C mit Beginn einer jeden 100 kHz-Periode durch einen elektronischen Schalter 77 entladen wird. Zu diesem Zweck lockt sich die phasenstarre Steuerschaltung auf die Arbeitsfrequenz von 100 kHz des Systems auf und übermittelt an den Tastverhältnisumsetzer 74 die erforderlichen Steuersignale, durch welche mit Beginn einer jeden 100 kHz-Periode der Kondensator C wieder entladen wird. Der Spannungsverlauf am Kondensator C ist in Figur 10 dargestellt und bildet eine Impulsfolge, deren Amplitude durch das Tastverhältnis der pulsbreitenmodulierten Rechteckspannung in Figur 8 bestimmt wird. Die Spannung $U_C$ am Kondensator C enthält neben der Niederfrequenz des Audiosignals die Systemfrequenz von 100 kHz und Oberwellen der Systemfrequenz sowie einen Gleichspannungsanteil; sie wird einem AC-gekoppelten Tiefpaßfilter höherer Ordnung 75 zugeführt, welches den NF-Anteil abtrennt und dem NF-Verstärker 22 zuführt, der schließlich den Türlautsprecher 4 speist. Auch der NF-Verstärker 22 wird durch die Brückenschaltung 47 mit Strom versorgt. Das ihm zugeführte NF-Signal ist in Figur 11 dargestellt.

Befehle und Zustandsinformationen werden in Gestalt einer Folge von binär codierten Signalen (Datentelegramm) übertragen. Zu diesem Zweck wird die Periode des Trägersignals $U_T$ (siehe Figur 3) als "Leer-Rahmen" für ein zu übertragendes Bit des seriellen Datentelegramms benutzt. Markiert man diesen "Leer-Rahmen" jeweils nach einer Zustandsänderung, so ist die Codierung von vier Zuständen in jeder Übertragungsperiode möglich - siehe Figur 12:

1. Markierung 1 nicht vorhanden, Markierung 2 nicht vorhanden
2. Markierung 1 vorhanden, Markierung 2 nicht vorhanden

3. Markierung 1 nicht vorhanden,
Markierung 2 vorhanden

4. Markierung 1 vorhanden,
Markierung 2 vorhanden

Zur Erhöhung der Übertragungs-Sicherheit läßt sich der so gegebene Coderaum sinnvoll redundant nutzen:

Keine Übertragung:

1. Markierung 1 nicht vorhanden,
Markierung 2 nicht vorhanden

Logische 1:

2. Markierung 1 vorhanden,
Markierung 2 nicht vorhanden

Logische 0:

3. Markierung 1 nicht vorhanden,
Markierung 2 vorhanden

Start-Stop-Bit:

4. Markierung 1 vorhanden,
Markierung 2 vorhanden

Solche Markierungen können im Modem 13 (Figur 1) beispielsweise in Form eines HF-Signals mit einer Frequenz von einigen MHz (HF-Burst) auf die Rechteckimpulse aufgesetzt werden und das Modem 21 bzw. 31 im Türmodul 2 bzw. 3 restauriert das auf diese Weise übertragene Datentelegramm.

**Patentansprüche**

1. Verfahren zum Versorgen von Lautsprechern (4, 5) in Fahrzeugtüren mit elektrischen NF-Audiosignalen und von weiteren elektrischen Verbrauchern (6, 7) in den Fahrzeugtüren mit Steuersignalen, indem die NF-Audiosignale und die Steuersignale ausserhalb der Tür auf ein gemeinsames Trägersignal aufmoduliert und auf diesem Trägersignal über eine Datenleitung in die Tür übertragen, dort frequenzmässig nach Audio- und Steuersignalen getrennt und an, ihre vorbestimmten Verbraucher (4 - 7) weitergeleitet werden, und das Trägersignal in der Tür gleichgerichtet und zur Stromversorgung der in der Tür vorgesehenen Verbraucher (4 - 7) verwendet wird.

2. Verfahren nach Anspruch 1, **dadurch gekennzeichnet**, dass ein rechteckförmiges Trägersignal verwendet wird.

3. Verfahren nach Anspruch 1, **dadurch gekenn-** zeichnet, dass das Trägersignal frequenzmoduliert wird.

4. Verfahren nach Anspruch 1 oder 2, **dadurch gekennzeichnet**, dass das Trägersignal pulsbreitenmoduliert wird, um die NF-Audiosignale zu übertragen.

5. Verfahren nach einem der vorstehenden Ansprüche, **dadurch gekennzeichnet**, dass die Steuersignale binär codiert und als serieller Daten-Bus auf dem Trägersignal übertragen werden.

6. Verfahren nach Anspruch 5, **dadurch gekennzeichnet**, dass die binären Steuersignale dem Trägersignal durch Amplitudenmodulation aufgeprägt werden.

7. Verfahren nach einem der vorstehenden Ansprüche, **dadurch gekennzeichnet**, dass in der Tür erzeugte, für elektrische Verbraucher (4 - 7) ausserhalb der Tür bestimmte Steuersignale ebenfalls dem Trägersignal aufmoduliert und dann aus der Tür heraus übertragen werden.

8. Verfahren nach einem der vorstehenden Ansprüche, **dadurch gekennzeichnet**, dass das Trägersignal leitungsgebunden ist.

9. Verfahren nach einem der vorstehenden Ansprüche, **dadurch gekennzeichnet**, dass das Trägersignal eine Frequenz zwischen 80 kHz und 120 kHz hat.

10. Schaltungsanordnung zum Versorgen von Lautsprechern (4, 5) in den Fahrzeugtüren mit elektrischen NF-Audiosignalen und von weiteren elektrischen Verbrauchern (6, 7) in Fahrzeugtüren mit Steuersignalen mit einem außerhalb der Türen angeordneten Bus-Steuergerät (1), welches eine Abfrageeinheit (10) zum Abfragen der Stellung von Schaltern und anderen ausserhalb der Tür angeordneten Bedienelementen (16), einen Frequenzgenerator (12) zur Erzeugung eines Trägersignals, einen Modulator (13) zum Aufmodulieren der von der Abfrageeinheit (10) gelieferten Steuersignale als serielle Daten auf das Trägersignal, einen Modulator (13) zum Aufmodulieren der von einem Autoradio (17) eingespeisten NF-Audio-Signale auf das Trägersignal und einen Mikroprozessor (14) zur Steuerung der Abläufe im Bus-Steuergerät (1) enthält, und
mit einer in der Tür vorgesehenen Schaltungsanordnung (2, 3), nachfolgend als Türmodul bezeichnet, welche eine Demodulator- und Trennstufe (21, 31), in welcher das über ein Koppelelement (44, 45) vom Bus-Steuergerät (1) über eine Datenleitung (40, 42, 43) übermittelte modulierte Signal demoduliert und in die Steuersignale und NF-Audiosignale getrennt wird, enthält wobei im Türmodul (2, 3) ein Gleichrichter (47) für das Trägersignal vorgesehen und als Stromquelle mit den Verbrauchern (4 - 7) verbunden ist.

11. Schaltungsanordnung nach Anspruch 10, **dadurch gekennzeichnet**, dass sie einen NF-Verstärker (22, 32) für die NF-Audiosignale und Schaltstufen (23, 33) zum Umsetzen der Steuersignale in Stellsignale für in der Tür vorgesehene Stellelemente (6, 7) enthält.

12. Schaltungsanordnung nach Anspruch 10 oder 11, **dadurch gekennzeichnet**, dass der Modulator (13, 21, 31) ein Frequenzmodulator ist.

13. Schaltungsanordnung nach Anspruch 10 oder 11, **dadurch gekennzeichnet**, dass der Modulator für die NF-Audiosignale ein Pulsbreitenmodulator (72, 73) ist.

14. Schaltungsanordnung nach einem der Ansprüche 10 bis 13, **dadurch gekennzeichnet**, dass als Modulator für die binär codierten Steuersignale ein Amplitudenmodulator vorgesehen ist.

15. Schaltungsanordnung nach Anspruch 14, **dadurch gekennzeichnet**, dass der Amplitudenmodulator ein Impulsgenerator oder Frequenzgenerator ist, dessen Ausgangssignal zum Trägersignal addiert wird.

16. Schaltungsanordnung nach einem der Ansprüche 10 bis 15, **dadurch gekennzeichnet**, dass im Türmodul (2, 3) ein Mikro-Controller (24, 34) zum Auswerten der demodulierten Steuersignale und zum Steuern der Schaltstufen (23, 33) vorgesehen ist.

17. Schaltungsanordnung nach einem der Ansprüche 10 bis 16, **dadurch gekennzeichnet**, dass das Bus-Steuergerät (1) mit mehreren Türmodulen (2, 3) verbunden ist.

18. Schaltungsanordnung nach einem der Ansprüche 10 bis 17, **dadurch gekennzeichnet**, dass im Türmodul (2, 3) ebenfalls eine Abfrageeinheit (20, 30), welche die Stellung von in der Tür angeordneten Schaltern und anderen Bedienelementen (8, 9) abfragt, und ein Modulator (21, 31) zum Aufmodulieren der von der Abfrageeinheit (20, 30) gelieferten Steuersignale auf das Trägersignal vorgesehen sind, und dass im Bus-Steuergerät (1) eine Demodulatorstufe (13) vorgesehen ist, in welcher das über das Koppelelement (44, 45) vom Türmodul (2, 3) übermittelte modulierte Signal zur Rückgewinnung der darin enthaltenen Steuersignale demoduliert und durch den Mikroprozessor (14) gesteuert an Schaltstufen zum Umsetzen der Steuersignale für ausserhalb der Türen vorgesehene Stellelemente oder an den Modulator (13) zur Übertragung an einen anderen Türmodul (3, 2) übergeben wird.

## Claims

1. Process for the supplying of loudspeakers (4,5) in vehicle doors with electric l.f. audio signals and of further electrical consumers (6,7) in the vehicle doors with control signals, wherein the l.f. audio signals and the control signals are modulated outside the door onto a common carrier signal and transmitted on this carrier signal over a data line into the door, separated there in frequency according to audio and control signals and conducted onward to their predetermined consumers (4-7), and the carrier signal is rectified in the door and used for the current supplying to the consumers (4-7) provided in the door.

2. Process according to claim 1, **characterised in** that a square-wave carrier signal is used.

3. Process according to claim 1, **characterised in** that the carrier signal is frequency modulated.

4. Process according to claim 1 or 2, **characterised in** that the carrier signal is pulse-width modulated in order to transmit the low frequency audio signals.

5. Process according to any of the preceding claims, **characterised in** that the control signals are binary-coded and are transmitted as a serial data bus on the carrier signal.

6. Process according to claim 5, **characterised in** that the binary control signals are impressed on the carrier signal by amplitude modulation.

7. Process according to any of the preceding claims, **characterised in** that control signals generated in the door, intended for electrical consumers (4-7) outside of the door, are likewise modulated on the carrier signal and then transmitted out of the door.

8. Process according to any of the preceding claims, **characterised in** that the carrier signal is wire-bound.

9. Process according to any of the preceding claims, **characterised in** that the carrier signal has a frequency between 80 kHz and 120 kHz.

10. Circuitry arrangement for the supplying of loudspeakers (4, 5) in the vehicle doors with electrical l.f. audio signals, and of further electrical consumers (6, 7) in vehicle doors with control signals, comprising

a bus-control apparatus (1) arranged outside of the doors which has an interrogation unit (10) for interrogating of the position of switches and other operating elements (16) arranged outside of the door,
a frequency generator (12) for the generating of a carrier signal,
a modulator (13) for the modulating of the control signals delivered from the interrogation unit (10) as serial data onto the carrier signal,
a modulator (13) for the modulating of the l.f. audio signals fed from an auto radio (17) onto the carrier signal
and a microprocessor (14) for the control of the processes in the bus control apparatus (1),
and with a circuitry arrangement (2, 3) provided in the door, hereinafter designated as door module, comprising a demodulator-and-decoupling-circuit (21, 31), in which the modulated signal transmitted by the bus control apparatus (1) over a coupling element (44, 45) via a data line (40,42,43) is demodulated and separated into the control signals and the l.f. audio signals, wherein in the door module (2, 3) there is provided a rectifier (47) for the carrier signal and it is connected as current source with the consumers (4-7).

11. Circuitry arrangement according to claim 10, **characterised in** that it contains a l.f. amplifier (22, 32) for the l.f. audio signals, and circuitry stages (23, 33) for converting of the control signals into setting signals for setting elements (6, 7) provided in the door.

12. Circuitry arrangement according to claim 10 or 11, **characterised in** that the modulator (13, 21, 31) is a frequency modulator.

13. Circuitry arrangement according to claim 10 or 11, **characterised in** that the modulator for the l.f. auto signals is a pulse-width modulator (72, 73).

14. Circuitry arrangement according to any of the claims 10 to 13, **characterised in** that, as modulator for the binary-coded control signals, an amplitude modulator is provided.

15. Circuitry arrangement according to claim 14, **characterised in** that the amplitude modulator is a pulse generator or a frequency generator, the output signal of which is added to the carrier signal.

16. Circuitry arrangement according to any of the claims 10 to 15, **characterised in** that in the door module (2, 3) there is provided a micro-controller (24, 34) for the evaluating of the demodulated control signals and for the controlling of the circuitry stages (23, 33).

17. Circuitry arrangement according to any of the claims 10 to 16, **characterised in** that the bus-control apparatus (1) is connected to several door modules (2, 3).

18. Circuitry arrangement according to any of the claims 10 to 17, **characterised in** that in the door module (2, 3) likewise an interrogation unit (20, 30) which interrogates the position of switches and other operating elements (8, 9) arranged in the door, and a modulator (21) for the modulating of the control signals delivered from the interrogation unit (20, 30) onto the carrier signal are provided, and that in the bus control apparatus (1) there is provided a demodulator stage (13), in which the modulated signal transferred from the door module (2, 3) via the coupling element (44, 45) is demodulated for the recovery of the control signals contained therein and, controlled by the microprocessor (14), passed to circuitry stages for the converting of the control signals for setting elements provided outside of the doors, or to the modulator (13) for the transfer to another door module (3, 2).

**Revendications**

1. Procédé pour alimenter des haut-parleurs (4, 5) dans des portières de véhicules en signaux électriques audio basse fréquence et d'autres récepteurs électriques (6, 7) dans des portières de véhicules en signaux de commande, dans lequel les signaux audio basse fréquence et les signaux de commande sont modulés à l'extérieur de la portière sur un signal porteur commun et sont transmis sur ce signal porteur via une ligne de données dans la porte où ils sont séparés en fonction de la fréquence en signaux audio et en signaux de commande et transmis ultérieurement à leurs récepteurs prédéfinis (4-7), et le signal porteur est redressé dans la portière et utilisé pour l'alimentation en courant des récepteurs (4-7) prévus dans la portière.

2. Procédé selon la revendication 1, caractérisé en ce qu'on utilise un signal porteur carré.

3. Procédé selon la revendication 1, caractérisé en ce que le signal porteur est modulé en fréquence.

4. Procédé selon la revendication 1 ou 2, caractérisé en ce que le signal porteur est modulé quant à la largeur d'impulsions, pour transmettre les signaux audio basse fréquence.

5. Procédé selon l'une quelconque des revendications précédentes, caractérisé en ce que les signaux de commande sont soumis à un codage binaire et sont transmis au signal porteur sous forme d'un bus de données sérielles.

6. Procédé selon la revendication 5, caractérisé en ce que les signaux de commande binaires sont imprimés sur le signal porteur par modulation d'amplitude.

7. Procédé selon l'une quelconque des revendications précédentes, caractérisé en ce que des signaux de commande générés dans la portière et destinés à des récepteurs électriques à l'extérieur de la portière sont également modulés sur le signal porteur et sont ensuite transmis hors de la portière.

8. Procédé selon l'une quelconque des revendications précédentes, caractérisé en ce que le signal porteur est relié par ligne.

9. Procédé selon l'une quelconque des revendications précédentes, caractérisé en ce que le signal porteur possède une fréquence entre 80 kHz et 120 kHz.

10. Circuit pour alimenter des haut-parleurs (4, 5) dans des portières de véhicules en signaux électriques audio basse fréquence et d'autres récepteurs électriques (6, 7) dans des portières de véhicules en signaux de commande à l'aide d'un bus de commande disposé à l'extérieur des portières, qui contient une unité (10) de demande d'informations pour obtenir des informations quant à la position des commutateurs et d'autres éléments de manoeuvre (16) disposés à l'extérieur de la portière, un générateur de fréquences (12) pour générer un signal porteur, un modulateur (13) pour moduler les signaux de commande fournis par l'unité de demande d'informations (10) sous forme de données sérielles sur le signal porteur, un modulateur (13) pour moduler les signaux audio basse fréquence amenés par une autoradio (17) sur le signal porteur et un microprocesseur (14) pour distribuer les séquences dans le bus de commande (1), et
comprenant un circuit (2, 3) prévu dans la portière, désigné ci-après par l'expression "module de portière", qui contient un étage démodulateur-séparateur (21, 31) dans lequel le signal modulé transmis par le bus de commande (1) via une ligne de données (40, 42, 43) en passant par un élément d'accouplement (44, 45) est démodulé et dans lequel les signaux de commande et les signaux audio basse fréquence sont séparés, dans lequel, dans le module de portière (2, 3), un redresseur (47) est prévu pour le signal porteur et est relié aux récepteurs (4-7) sous forme de source de courant.

11. Circuit selon la revendication 10, caractérisé en ce qu'il contient un amplificateur basse fréquence (22, 32) pour les signaux audio basse fréquence et des étages de commutation (23, 33) pour la conversion des signaux de commande en signaux de réglage pour des éléments de réglage (6, 7) prévus dans la portière.

12. Circuit selon la revendication 10 ou 11, caractérisé en ce que le modulateur (13, 21, 31) est un modulateur de fréquence.

13. Circuit selon la revendication 10 ou 11, caractérisé en ce que le modulateur est un modulateur de largeur d'impulsions (72, 73) pour les signaux audio basse fréquence.

14. Circuit selon l'une quelconque des revendications 10 à 13, caractérisé en ce qu'on prévoit, à titre de modulateur pour les signaux de commande à codage binaire, un modulateur d'amplitude.

15. Circuit selon la revendication 14, caractérisé en ce que le modulateur d'amplitude est un générateur d'impulsions ou un générateur de fréquences dont le signal de sortie est ajouté au signal porteur.

16. Circuit selon l'une quelconque des revendications 10 à 15, caractérisé en ce qu'on prévoit, dans le module de portière (2, 3), un microprocesseur (24, 34) pour évaluer les signaux de commande démodulés pour commander les étages de commutation (23, 33).

17. Circuit selon l'une quelconque des revendications 10 à 16, caractérisé en ce que le bus de commande (1) est relié à plusieurs modules de portières (2, 3).

18. Circuit selon l'une quelconque des revendications 10 à 17, caractérisé en ce qu'on prévoit également, dans le module de portière (2, 3), une unité de demande d'informations (20, 30) qui s'informe quant à la position des commutateurs et d'autres éléments de manoeuvre (8, 9) disposés dans la portière et un modulateur (21, 31) pour moduler les signaux de commande fournis par l'unité de demande d'informations (20, 30) sur le signal porteur et en ce qu'on prévoit, dans le bus de commande (1), un étage démodulateur (13) dans lequel le signal modulé transmis par le module de portière (2, 3) via l'élément d'accouplement (44, 45) est démodulé pour récupérer les signaux de commande qui y sont contenus et est distribué, via le microprocesseur (14), aux étages de commutation pour convertir les signaux de commande destinés à des éléments de réglage prévus à l'extérieur des portières ou au modulateur (13) à des fins de transmission à un autre module de portière (3, 2).

# Fig. 1

16  17  l  r  18  19

10  11  15

13  14  1

12  Dl  Dr

40

Masse
+

41

42

43

40

2  20  8  9  30  3

24  21  31  34

44  45

23  22  32  33

6  4  5  7

Fig. 2

Fig. 3

Fig. 4

Fig. 5

$U_{\overline{NF}}$

$U_o$

t

*Fig. 6*

$U_{S\theta Z}$

$U_o$

0

t

*Fig. 7*

u

t

*Fig. 8*

$U_c$

t

*Fig. 10*

$U_{NF}$

t

*Fig. 11*

## Fig. 9

## Fig. 12